# EUROPEAN PATENT APPLICATION

(11) **EP 4 439 927 A1**
(43) Date of publication of application: **02.10.2024**
(21) Application number: 22899739.1
(22) Date of filing: 04.03.2022
(51) Int. Cl.: H02K 1/14, H02K 3/28, H02K 1/16, H02K 3/12, H02K 3/52, H02K 3/42, F04B 35/04, F04B 39/00

(54) **ELECTRIC MOTOR, COMPRESSOR, AND REFRIGERATION APPARATUS**

(30) Priority: 03.12.2021 CN 202111468256
(71) Applicant: Guangdong Meizhi Compressor Co., Ltd., Foshan, Guangdong 528311 (CN)
(72) Inventor: MAO, Linshu, Foshan, Guangdong 528311 (CN); QIU, Xiaohua, Foshan, Guangdong 528311 (CN); YANG, Wenquan, Foshan, Guangdong 528311 (CN); ZHANG, Su, Foshan, Guangdong 528311 (CN)
(74) Representative: Ran, Handong
(86) International application number: PCT/CN2022/079187
(87) International publication number: WO 2023/097916

(57) **Abstract**

The present application provides an electric motor, a compressor, and a refrigeration apparatus. The electric motor comprises: a stator iron core comprising a plurality of iron core blocks spliced in a circumferential direction, each iron core block comprising a plurality of stator laminations stacked in an axial direction of the electric motor; and a rotor iron core comprising a plurality of rotor laminations stacked in an axial direction, wherein the number of the stator laminations is greater than that of the rotor laminations, and the iron loss of each stator lamination is less than that of each rotor lamination. According to the electric motor provided in the present application, under the condition of ensuring the performance and the efficiency of the electric motor, the manufacturing and assembling costs of a rotor of the electric motor are greatly reduced, so that the cost of the electric motor is reduced, and the cost performance of the electric motor is improved.

## Description

This application claims priority to Chinese Patent Application No. 202111468256.1 filed with China National Intellectual Property Administration on December 03, 2021 and entitled "ELECTRIC MOTOR, COMPRESSOR, AND REFRIGERATION APPARATUS", which is incorporated herein by reference in its entirety.

### FIELD

The present application relates to the field of electric motor manufacturing, and particularly relates to an electric motor, a compressor, and a refrigeration apparatus.

### BACKGROUND

At present, a stator iron core and a rotor iron core of an electric motor are often prepared by integrated stamping or split stamping, the use of the preparation method by integrated stamping will reduce the utilization rate of an iron core material, while the use of the preparation method by split stamping can effectively solve the problem of a low utilization rate of the iron core material while will bring about the problem of an increased loss of the iron core material; in order to improve the performance of the electric motor, the iron core of the electric motor often uses a material with low iron loss, and thus the material cost is high. Therefore, for the iron core of the electric motor formed by split stamping, how to improve the utilization rate and reduce the loss of the material has become an urgent problem to be solved.

### SUMMARY

The present application aims to solve at least one of the problems existing in the prior art or related art.

Thus, the first aspect of the present application provides an electric motor.

The second aspect of the present application provides a compressor.

The third aspect of the present application provides a refrigeration apparatus.

In view of this, the first aspect according to the present application provides an electric motor, including: a stator iron core and a rotor iron core, and the stator iron core comprises a plurality of iron core blocks spliced in a circumferential direction, each iron core block comprises a plurality of stator laminations stacked in an axial direction of the electric motor; and the rotor iron core comprises a plurality of rotor laminations stacked in an axial direction; and the number of the stator laminations is greater than that of the rotor laminations, and the iron loss of each stator lamination is less than that of each rotor lamination.

In an embodiment, the electric motor provided by the present application comprises the stator iron core and the rotor iron core. The stator iron core comprises a plurality of iron core blocks, and the stator iron core can be rendered by connecting all the iron core blocks in the circumferential direction. The stator iron core comprises a tooth part, and a stator winding is wound on the tooth part; in order to improve the performance of the electric motor, in the case that other conditions are not changed, it is necessary to wind as many turns of stator windings as possible on the same tooth part. The tooth part is usually located at the inner side of the stator iron core and extends towards the center of the inner hollow place of the stator iron core, and when the stator winding is wound on the tooth part, this will usually be affected by other parts of the stator iron core, and then winding the stator winding becomes difficult; the distance between two adjacent tooth parts is fixed and narrow, and thus, when the stator winding is wound on a tooth part, this is usually blocked by other adjacent tooth parts of the tooth part, this structure further impedes the winding of the stator windings, and the assembling difficulty for the electric motor is increased, and the slot fullness rate of the stator iron core is affected. However, the stator iron core comprises a plurality of iron core blocks, when the iron core blocks are not connected to be the stator iron core, each iron core block is respectively wound with the stator winding, the iron core block comprises the tooth part, the tooth part is directly exposed, and thus, when the stator winding is wound, it will not be impeded by other parts of the stator iron core; if each iron core block only comprises one tooth part, when the stator winding is wound on the tooth part, there are not adjacent tooth parts on the two sides of the tooth part, the operation space becomes large, the winding difficulty of the stator windings is greatly reduced, and as many turns of stator windings as possible can be wound on the tooth part, and finally, the iron core blocks after the winding of all the stator windings is completed are spliced along the circumferential direction, and thus a complete stator is obtained.

Furthermore, in a working process of the electric motor, the iron loss of the stator iron core and the rotor iron core is rendered due to multiple aspects, while the eddy current loss is one of the most important sources of the iron loss. In order to reduce the eddy current loss generated by the stator iron core and the rotor iron core, the stator iron core comprises a plurality of iron core blocks, each iron core block comprises a plurality of stator laminations stacked in the axial direction of the electric motor; the rotor iron core comprises a plurality of rotor laminations stacked in the axial direction of the electric motor. Such method that the iron core block is stacked by stator laminations and the rotor iron core is stacked by the rotor laminations can effectively reduce the eddy current loss of the stator iron core and the rotor iron core, and improve the energy and efficiency of the electric motor.

In an embodiment, during the working process of the electric motor, the iron loss of the rotor is usually greatly less than that of the stator, and therefore, through disposing the iron loss of each rotor lamination to be greater than that of each stator lamination, under the condition of ensuring the performance of the electric motor, the cost of the rotor can be reduced, and furthermore, the cost of the electric motor is reduced, and the cost performance of the electric motor is improved.

Furthermore, the number of the stator laminations is greater than that of the rotor laminations, and the iron loss of the rotor iron core is greatly less than that of the stator iron core, and therefore, under the condition of ensuring the performance and the efficiency of the electric motor, the requirements for the material and structure of the rotor iron core can be appropriately relaxed to reduce the cost of the electric motor. Generally, the axial thicknesses of the stator and the rotor of the electric motor are substantially the same, that is, the axial thickness of the stator iron core is equivalent to the axial thickness of the rotor iron core. In order to reduce the eddy current loss generated by the stator iron core and the rotor iron core, the iron core block of the stator iron core comprises a plurality of stator laminations stacked in the axial direction of the electric motor, and the rotor iron core comprises a plurality of rotor laminations stacked in the axial direction of the electric motor. In order to reduce the manufacturing cost of the electric motor, the number of the stator laminations is disposed to be greater than that of the rotor laminations, since the axial thickness of the stator iron core is equivalent to the axial thickness of the rotor iron core, the thickness of the stator lamination should be less than the thickness of the rotor lamination, and it is understandable that the thinner the stator lamination or the rotor lamination is and the greater the number of the stacked stator laminations or the stacked rotor laminations is, the less the iron loss of the stator iron core or the rotor iron core is and the higher the manufacturing and assembling cost is; therefore, under the condition of ensuring the efficiency of the electric motor, the requirements for the manufacturing and assembling conditions of the rotor iron core which has a less iron loss can be appropriately relaxed, the thickness of the rotor lamination is increased while the number of the rotor laminations is reduced, and the manufacturing cost of the rotor is reduced under the condition of ensuring the efficiency of the electric motor, and furthermore, the manufacturing cost of the electric motor is reduced, and the cost performance of the electric motor is improved.

For the electric motor provided in the present embodiment, the stator iron core comprises a plurality of iron core blocks spliced along the circumferential direction, and thus the difficulty of winding the stator windings on the stator iron core is reduced and the slot fullness rate of the stator iron core is increased, and the performance of the electric motor is improved; the iron core block comprises a plurality of stator laminations stacked in the axial direction of the electric motor and the rotor iron core comprises a plurality of rotor laminations stacked in the axial direction of the electric motor, and such a structure can effectively reduce the eddy current loss of the stator iron core and the rotor iron core, reduce the iron loss of the electric motor and improve the energy and efficiency of the electric motor; through the arrangement that the number of the stator laminations is greater than that of the rotor laminations, i.e., the thickness of the rotor lamination is greater than that of the stator lamination, and through the arrangement that the iron loss of each stator lamination is less than that of each rotor lamination, under the condition of ensuring the performance of the electric motor, the manufacturing and assembling costs of a rotor are reduced as much as possible, and furthermore, the cost of the electric motor is reduced, and the cost performance of the electric motor is improved.

The above electric motor provided by the present application can further comprise the following additional features.

In the above embodiment, furthermore, the iron loss of the above stator lamination is greater than or equal to 1.8W/Kg and less than or equal to 3.8W/Kg when it is magnetized to 1.6T at a frequency of 60Hz.

In the embodiment, the iron loss of the above stator lamination is less than or equal to 3.8W/Kg and greater than or equal to 1.8W/Kg when it is magnetized to 1.6T at a frequency of 60Hz, both the upper limit and the lower limit of the iron loss of the stator lamination when it is magnetized to 1.6T at a frequency of 60Hz are defined, and this ensures performance of the electric motor; the iron loss of each rotor lamination should be greater than that of each stator lamination, that is, the iron loss of the rotor lamination is at least greater than or equal to 1.8W/Kg, the cost of the material of the rotor lamination is less than the cost of the material of the stator lamination, and the cost of the material of the rotor lamination is reduced under the condition of not affecting the performance of the electric motor as much as possible, and the cost performance of the electric motor is improved.

For the electric motor provided in the present embodiment, through arranging the upper limit and the lower limit of the iron loss of the stator lamination when it is magnetized to 1.6T at a frequency of 60Hz, a specific requirement for the performance of the material of the stator lamination is set, while the iron loss of each rotor lamination should be greater than that of each stator lamination, and therefore, the performance of the material of the rotor lamination is defined indirectly. It is understandable that the iron loss of the rotor lamination is not limited to the two limiting values of 1.8W/Kg and 3.8W/Kg when it is magnetized to 1.6T at a frequency of 60Hz, and is at least greater than 1.8W/Kg, as long as the performance of the electric motor is ensured, the iron loss of the rotor lamination under the above condition can be increased appropriately, and thus the cost of the material of the rotor lamination is reduced, and the cost performance of the electric motor provided by the present embodiment is improved. In addition, as long as the number of the stator laminations is greater than that of the rotor laminations, the iron loss of each rotor lamination is greater than that of each stator lamination, the condition of measuring the iron loss, for example, the stator lamination is magnetized to 1.7T at a frequency of 60Hz, further falls within the protection scope of the present application.

And, 1.6T represents 1.6 Tesla, and 3.8W/Kg represents 3.8 watts per kilogram.

In any of the above embodiments, furthermore, the iron loss of the above rotor lamination is less than or equal to 12.5W/Kg when it is magnetized to 1.6T at a frequency of 60Hz.

In the embodiment, the iron loss of the above rotor lamination should be less than or equal to 12.5W/Kg when it is magnetized to 1.6T at a frequency of 60Hz, and the upper limit of the iron loss of the rotor lamination when it is magnetized to 1.6T at a frequency of 60Hz is defined. Since the iron loss of a rotor is determined by the material of the rotor under the same condition, the material of the rotor plays an important role in the manufacturing cost of the electric motor, it is necessary to find the upper limit of the iron loss of the rotor lamination suitable in a certain environment, to reduce the manufacturing cost of the electric motor as much as possible while the efficiency of the electric motor is met. When the rotor lamination is magnetized to 1.6T at a frequency of 60Hz, once the iron loss of the rotor lamination is greater than 12.5W/Kg, there is not much change in the corresponding cost of the electric motor, but the magnitude of the decrease in the efficiency of the electric motor becomes severe. Therefore, the iron loss of the rotor lamination can be defined, when the rotor lamination is magnetized to 1.6T at a frequency of 60Hz, the iron loss of the rotor lamination should be less than or equal to 12.5W/Kg, and then the selection for the material of the rotor lamination is defined.

According to the electric motor provided by the present embodiment, through the arrangement that the iron loss of the rotor lamination should be less than or equal to 12.5W/Kg when it is magnetized to 1.6T at a frequency of 60Hz, the selection for the material of the rotor lamination is further defined, and the cost of the electric motor can be decreased as much as possible under the condition of ensuring the working efficiency of the electric motor.

In any of the above embodiments, furthermore, the iron loss of the above rotor lamination is greater than or equal to 2.4W/Kg when it is magnetized to 1.6T at a frequency of 60Hz.

In the embodiment, the iron loss of the above rotor lamination should be greater than or equal to 2.4W/Kg when it is magnetized to 1.6T at a frequency of 60Hz, which makes a specific definition to the lower limit of the iron loss of the rotor lamination when it is magnetized to 1.6T at a frequency of 60Hz. Since the material of the rotor determines the cost of the electric motor and the iron loss of the rotor under the same condition, the iron loss of the rotor plays an important role in the efficiency of the electric motor. Therefore, it is necessary to find the lower limit of the iron loss of the rotor lamination suitable in a certain environment, to improve the efficiency of the electric motor as much as possible within an acceptable range of the cost of the electric motor. When the rotor lamination is magnetized to 1.6T at a frequency of 60Hz, the iron loss of the rotor lamination is greater than or equal to 2.4W/Kg, then the efficiency of the electric motor satisfies working requirements, while once the iron loss of the rotor lamination is less than 2.4W/Kg, the cost of the electric motor will increase significantly, and at the moment, the cost of the electric motor is beyond the acceptable range for a general manufacturer. Therefore, the iron loss of the rotor lamination can be defined, when the rotor lamination is magnetized to 1.6T at a frequency of 60Hz, the iron loss of the rotor lamination should be large than or equal to 2.4W/Kg, and then the selection for the material of the rotor lamination is defined.

According to the electric motor provided by the present embodiment, through the arrangement that the iron loss of the rotor lamination should be greater than or equal to 2.4W/Kg when it is magnetized to 1.6T at a frequency of 60Hz, the selection for the material of the rotor lamination is further defined, and the efficiency of the electric motor can be improved as much as possible within an acceptable range of the cost of the electric motor.

In any of the above embodiments, furthermore, the number of the above stator laminations is X, the number of the above rotor laminations is Y, and they satisfy 1.15Y≤X≤1.5Y.

In the embodiment, the number of the above stator laminations should be greater than that of the rotor laminations. If the number of the stator laminations is set to be X and the number of the rotor laminations is set to be Y, then X>Y. Both the number of the stator laminations and the number of the rotor laminations will generate influence to the efficiency of the electric motor, and in addition, the iron loss of the stator lamination is less than that of the rotor lamination, the thickness of the stator iron core in the axial direction of the electric motor is equivalent to thickness of the rotor iron core in the axial direction of the electric motor, that is, the cost of the stator lamination is greater than that of the rotor lamination; in order to save cost as much as possible, the number X of the stator laminations and the number Y of the rotor laminations should be set according to actual needs, and the difference between the two should not be too significant. When the number X of the stator laminations is certain while the number Y of the rotor laminations is too small, during the working process of the electric motor, the eddy current loss of the rotor iron core is too large, the iron loss is too large, and thus the efficiency of the electric motor is lowered; when the number X of the stator laminations is certain while the number Y of the rotor laminations is too large, the manufacturing and assembling costs of the rotor iron core are too large, the improving of the efficiency of the electric motor is limited, the cost of the electric motor is increased, and the cost performance is reduced. Therefore, when the number X of the stator laminations is certain, it is necessary to limit the number Y of the rotor laminations, and the specific range of the number Y of the rotor laminations is 1.15Y≤X≤1.5Y.

According to the electric motor provided in the present embodiment, through setting the number X of the stator laminations to be certain, in order to reduce the cost of the electric motor while improve the efficiency of the electric motor as much as possible, and improve the cost performance of the electric motor, the value of the number Y of the rotor laminations is defined, and the value of Y is limited to be in a range, specifically, 1.15Y≤X≤1.5Y.

In any of the above embodiments, furthermore, there is a stator groove between two adjacent iron core blocks in the above plurality of iron core blocks, and the width of the notch of the stator groove is M, the minimum gap between the stator iron core and the rotor iron core is L1, and, 0.15≤L1/M≤1.5.

In the embodiment, there is a stator groove between two adjacent iron core blocks in the above iron core blocks, and the width of the notch of the stator groove is M. The iron core block comprises a tooth part, the top portion of the tooth part is provided with a tooth boot for limiting the stator windings wound on the tooth part, both of two adjacent tooth parts have a tooth boot close to each other at the top portions, and the distance between the two tooth boots is called the notch, and the width of the notch is M, the greater the M is, the greater the iron loss of a rotor is; if the M is too small, the performance of the electric motor will be affected, and this makes the working of the electric motor unstable. However, the minimum gap between the stator iron core and the rotor iron core is L1, the greater the L1 is, the less the iron loss of the rotor is, but this will cause excessive magnetic leakage, increase the operating cost of the electric motor, and reduce the efficiency of the electric motor, and thus, if the L1 is too small, the gap between the stator iron core and the rotor iron core is too small, when the rotor rotates, the two will easily rub and collide with each other, and this results in the phenomenon of sweeping the chamber and damages the electric motor. Therefore, in order that the value of L1 and the value of M are in a reasonable range, it is necessary to define their relations, and 0.15≤L1/M≤1.5, and thus they affect and restrict each other, both L1 and M can obtain an appropriate value, and then the iron loss of the rotor is reduced as much as possible while the working efficiency of the electric motor is ensured.

According to the electric motor provided by the present embodiment, the width M of the notch and the minimum gap L1 between the stator iron core and the rotor iron core restrict each other and both of them are in a reasonable range, specifically, 0.15≤L1/M≤1.5, through reducing M as much as possible within a reasonable range, the value of L1 is further defined, and the iron loss of the rotor of the electric motor is reduced to the maximum extent, and thus the effect that the cost of the electric motor is reduced while the efficiency of the electric motor does not change much is achieved, and the cost performance of the electric motor is improved.

In any of the above embodiments, furthermore, the maximum gap between the above stator iron core and the above rotor iron core is L2, and, 0.15≤L2×L1≤2.

In the embodiment, there is a gap between the stator iron core and the rotor iron core, due to the structure feature of the stator iron core and the rotor iron core, the width of the gap between them is not a constant value. The minimum gap between the stator iron core and the rotor iron core is L1, and the maximum gap between the stator iron core and the rotor iron core is L2. According to the specific structures of the stator iron core and the rotor iron core, when the direct axis of the rotor of the electric motor is aligned with the centerline of the tooth part of the stator of the electric motor, along the center line of the cross axis, the distance between the stator iron core and the rotor iron core in the centerline of the cross axis is the maximum gap L2 between the stator iron core and a rotary shaft iron core. Similar to L1, if the value of L2 is too large, it will cause excessive magnetic leakage and reduce the efficiency of the electric motor; if the value of L2 is too small, the corresponding value of L1 will be less, and the gap between the stator iron core and the rotor iron core will be very small; when the rotor rotates, the two easily rub and collide with each other, and this results in the phenomenon of sweeping the chamber and damages the electric motor. Therefore, similar to L1, it is necessary to limit the value of L2. However, the value of L1 is limited to be in a range, and thus L2 can be limited through L1, specifically, 0.15≤L2×L1≤2.

In any of the above embodiments, furthermore, the above iron core block comprises a yoke part and a tooth part, the tooth part is connected to the yoke part, the tooth part comprises a tooth root and a tooth boot, and the tooth root is connected between the yoke part and the tooth boot; and, there is a notch between the tooth boots of two adjacent iron core blocks, and the width of the end part of the tooth boot is L3, 0.16^L3/M^3.

In the embodiment, the yoke part and the tooth part are provided on the iron core block, and the tooth part is connected to the yoke part. When the stator iron core is formed by splicing a plurality of iron core blocks, two adjacent iron core blocks are connected through the yoke part, and the tooth parts of two adjacent iron core blocks do not contact each other. However, the tooth part comprises the tooth root and the tooth boot, and the tooth boot is connected to the yoke part through the tooth root. When two iron core blocks are connected, the tooth boots of the above two iron core blocks get close to each other, the gap between the two tooth boots is called the notch, the width of the notch is M, and the width of the end part of the tooth boot is L3. When the width L3 of the end part of the tooth boot is too large, the space for winding the stator windings in the tooth part will be decreased, the turns of the stator windings will be decreased, and the performance of the electric motor is lowered; if the width L3 of the end part of the tooth boot is too small, the stator winding cannot be restricted effectively, and this easily cause the detachment of the stator winding. Therefore, it is necessary to restrict the value of the L3. L3 can be restricted through the value of M, specifically, 0.16^L3/M^3.

In any of the above embodiments, furthermore, the plurality of iron core blocks comprise a plurality of yoke parts distributed along the circumferential direction, each yoke part comprises a convex part and a concave part distributed at the two sides of the circumferential direction, and the convex part of one yoke part extends into the concave part of the adjacent yoke part.

In the embodiment, the plurality of iron core blocks comprise a plurality of yoke parts distributed along the circumferential direction, the two sides of each yoke part are respectively provided with the convex part and the concave part. When the convex part of the yoke part of each iron core block is inserted into the concave part of the adjacent iron core block, the two adjacent iron core blocks are connected to each other, and all the iron core blocks are connected and jointly form the stator iron core.

According to the electric motor provided by the present embodiment, through disposing the convex part and the concave part with mutually matching shapes on both sides of the yoke part of each iron core block in the circumferential direction, two adjacent iron core blocks can be connected through the matching of the convex part and the concave part. When the convex part of the yoke part of the same iron core block extends into the concave part of the yoke part of another iron core block, the two iron core blocks are connected together, and all the iron core blocks are connected successively and jointly form the stator iron core.

In any of the above embodiments, furthermore, the number of the above stator grooves is greater than or equal to 6, and less than or equal to 12.

In the embodiment, the above stator groove is the space between two adjacent tooth parts. When the iron core blocks are connected and form a complete stator iron core, the number of the stator grooves is equal to the number of the tooth parts, while the tooth parts and the yoke parts correspond to each other one by one, and thus the number of the stator grooves is further equal to the number of the yoke parts at the same time. When the size of the stator is certain, the number of the stator windings, the slot fullness rate of the stator and the size of the space of the stator grooves have a very important influence on the performance of the stator of the electric motor, while the number of the stator windings, the slot fullness rate of the stator and the size of the space of the stator grooves can be determined by the number of the tooth parts on the stator iron core. Therefore, when the size of the stator is certain, the number of the tooth parts that the stator iron core comprises has an important influence to the performance of the electric motor. Through limiting the number of the stator grooves, the number of the tooth parts and the number of the yoke parts on the stator iron core are further limited, and it is further ensured that the performance of the electric motor is within a reasonable range. The number of the stator grooves is greater than or equal to 6, and less than or equal to 12.

According to the electric motor provided in the present embodiment, through limiting the number of the stator grooves in the stator iron core, it is required that the number of the stator grooves should be greater than or equal to 6, and less than or equal to 12, and meanwhile, the number of the tooth parts and the number of the yoke parts on the stator iron core, which are the same with the number of the stator grooves, are further limited, and furthermore, it is ensured that the performance of the electric motor where the stator iron core is located is in a reasonable range.

In any of the above embodiments, furthermore, the outer diameter of the stator iron core is D1, the outer diameter of the rotor iron core is D2, and, 0.47≤D1/D2≤0.68.

In the embodiment, the above rotor iron core is disposed inside the stator ion core; when the electric motor works, the rotor iron core needs to rotate inside the stator iron core, therefore, the outer diameter of the rotor iron core should be less than the inner diameter of the stator iron core. When the outer diameter of the rotor iron core and the inner diameter of the stator iron core are determined, the size of the outer diameter of the stator iron core determines the size of the space of the stator groove in the stator iron core, and further determines the number of the stator windings wound on the tooth part and the magnitude of magnetic force produced in the stator iron core when the electric motor works. When the outer diameter of the stator iron core is too large, the tooth part and the stator groove in the stator iron core are further too large, the performance of the stator is affected, and the internal magnetic field of the stator iron core is too large when the electric motor works, the rotor rotates in an excessively large magnetic field, the energy for producing the magnetic field and a portion of the material of the stator iron core are wasted, and under the condition of achieving the same effect, the cost is wasted; when the outer diameter of the stator iron core is too small, the tooth part and the stator groove in the stator iron core are further too small, the performance of the stator is affected and the internal magnetic field of the stator iron core is too small when the electric motor works, it is difficult for the rotor to rotate in a magnetic field that is too small, the performance of the electric motor is affected, the efficiency of the electric motor is reduced, and the required effect cannot be achieved. Therefore, the relation between the size of the rotor iron core and the size of the stator iron core is defined to ensure the efficiency of the electric motor. Specifically, the ratio of the outer diameter D1 of the stator iron core to the outer diameter D2 of the rotor iron core has an upper limit of 0.68 and a lower limit of 0.47, i.e., 0.47≤D1/D2≤ 0.68.

According to the electric motor provided in the present embodiment, through the arrangement that the ratio of the outer diameter D1 of the stator iron core to the outer diameter D2 of the rotor iron core has an upper limit of 0.68 and a lower limit of 0.47, both the size of the stator iron core and the size of the rotor iron core are in a reasonable range, the efficiency of the electric motor is ensured, and this avoids that the stator iron core is too large or too small relative to the rotor iron core, which results in the cost waste and reduces the efficiency of the electric motor.

In any of the above embodiments, furthermore, the number of poles of the above electric motor is greater than or equal to 4 and less than or equal to 10.

In the embodiment, the number of the poles of the electric motor directly determines the power, the rotation speed, and the performance of the electric motor, and is one of the most important parameters of the electric motor. To minimize cost as much as possible while ensure the efficiency of the electric motor, it is necessary to limit the number of the poles of the electric motor. The number of the poles of the electric motor cannot be too small, otherwise the power of the electric motor is too small and the use of the electric motor is affected; the number of the poles in the electric motor should not be too large, a too large number of the poles will increase the manufacturing cost of the electric motor and cause unnecessary waste. Specifically, the number of poles of the above electric motor is defined to be greater than or equal to 4 and less than or equal to 10.

In any of the above embodiments, furthermore, the above rotor iron core is sleeved on the inner side of the above stator iron core.

In the embodiment, the above rotor iron core is sleeved on the inner side of the above stator iron core; when the electric motor works, the rotor iron core rotates and works in the internal space of the stator iron core due to the influence of a magnetic force. The electric motor provided in the present embodiment is an inner rotor electric motor.

In any of the above embodiments, furthermore, the above electric motor comprises a permanent magnet motor.

In the embodiment, the above electric motor comprises the permanent magnet motor, the permanent magnet motor has the advantages of high power efficiency, high power factor, low iron loss, etc., and there is little friction and noise during the working process. From multiple perspectives, the permanent magnet motor has significant advantages over other types of electric motors and is suitable for the electric motor used in the present embodiment.

The second aspect according to the present application further provides a compressor, and the compressor comprises the electric motor provided in any of the above embodiments.

The compressor provided by the present application comprises the electric motor according to any of the above embodiments, and therefore has all the beneficial effects of the above electric motor, which are not stated here one by one.

In the embodiment, the above compressor further comprises a shaft, a power unit, a main bearing and an auxiliary bearing, and, the shaft passes through the rotor iron core of the rotor, and is connected to the rotor iron core; the power unit comprises a piston and a cylinder, the cylinder is connected to the piston, and the piston is connected to the shaft; the main bearing is provided on the shaft, and located between the power unit and the electric motor; the auxiliary bearing is further provided at one end of the shaft, and the power unit is located between the auxiliary bearing and the main bearing.

Specifically, the shaft of the compressor passes through the shaft hole of the rotor iron core and is connected to the rotor iron core, and the shaft is connected to the power unit; when the compressor works, the cylinder of the power unit drives the piston to move, the piston brings the shaft to rotate and further brings the rotor iron core to rotate, and the main bearing and the auxiliary bearing are respectively located at the two ends of the power unit along the direction of the shaft.

The third aspect according to the present application further provides a refrigeration apparatus, and the above refrigeration apparatus comprises the electric motor provided in any of the above embodiments, or the compressor provided in any of the above embodiments.

The refrigeration apparatus is a typical electrical device that requires the use of an electric motor. A conventional refrigeration apparatus requires the use of the compressor, while only a few special refrigeration apparatuses are not equipped with the compressor, instead, other types of equipment are directly driven by the electric motor for cooling and refrigeration.

The refrigeration apparatus provided by the present application comprises the electric motor of the above embodiments, or the compressor of the above embodiments, and therefore, the above refrigeration apparatus has all the beneficial effects of the above electric motor or the above compressor, which are not stated here one by one.

The additional aspects and advantages of the present application will be obvious in the following description, or can be understood through the implementation of the present application.

### BRIEF DESCRIPTION OF THE DRAWINGS

The above and/or additional aspects and advantages of the present application will be obvious and understood easily from the following description of the embodiments in combination with the accompanying drawings.
FIG. 1 is a schematic view of the structure of an axial section of an electric motor according to an embodiment of the present application;
FIG. 2 is an enlarged schematic view of the structure of part A in FIG. 1;
FIG. 3 is a schematic view of the structure of an iron core block according to an embodiment of the present application;
FIG. 4 is a schematic view of the influence to the efficiency of an electric motor caused by the changes of the iron loss of the material of a rotor according to an embodiment of the present application;
FIG. 5 is a schematic view of the change of the cost of an electric motor caused by the change of the material of a rotor according to an embodiment of the present application;
FIG. 6 is a schematic view of the relation between the change of gap L1 and the change of the iron loss of a rotor according to an embodiment of the present application;
FIG. 7 is a schematic view of the relation between the change of notch M and the change of the iron loss of a rotor according to an embodiment of the present application; and
FIG. 8 is a schematic view of the structure of a compressor according to an embodiment of the present application.

### Reference signs:

100: electric motor, 110: stator iron core, 111: iron core block, 112: yoke part, 113: tooth part, 114: tooth root, 115: tooth boot, 116: notch, 120: rotor iron core, 121: permanent magnet, 130: stator winding, 200: compressor, 210: shaft, 220: power unit, 221: cylinder, 222: piston, 230: main bearing, 240: auxiliary bearing.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

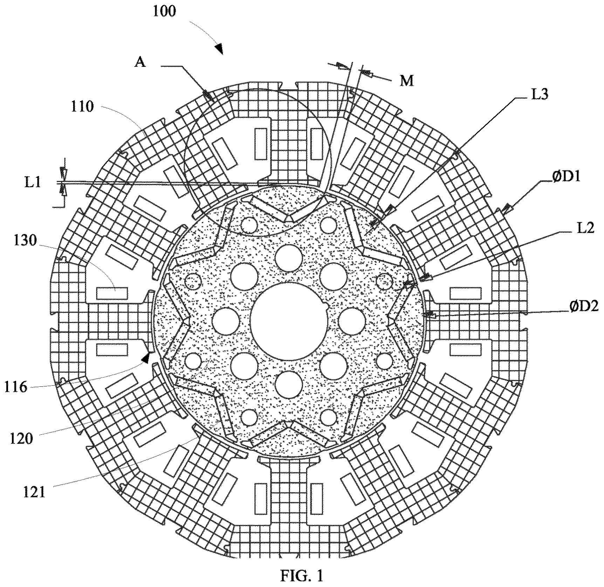

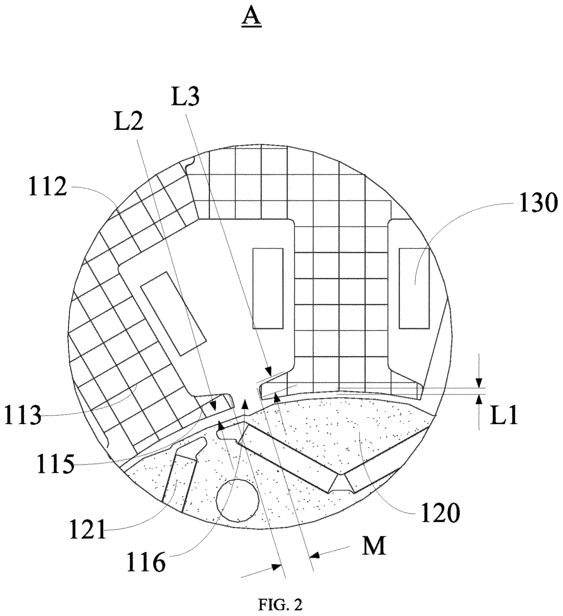

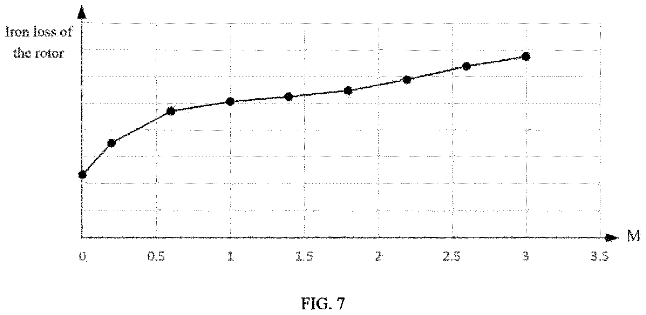

An electric motor 100, a compressor 200, and a refrigeration apparatus according to some embodiments of the present application are described in the following by referring to FIG. 1 to FIG. 8.

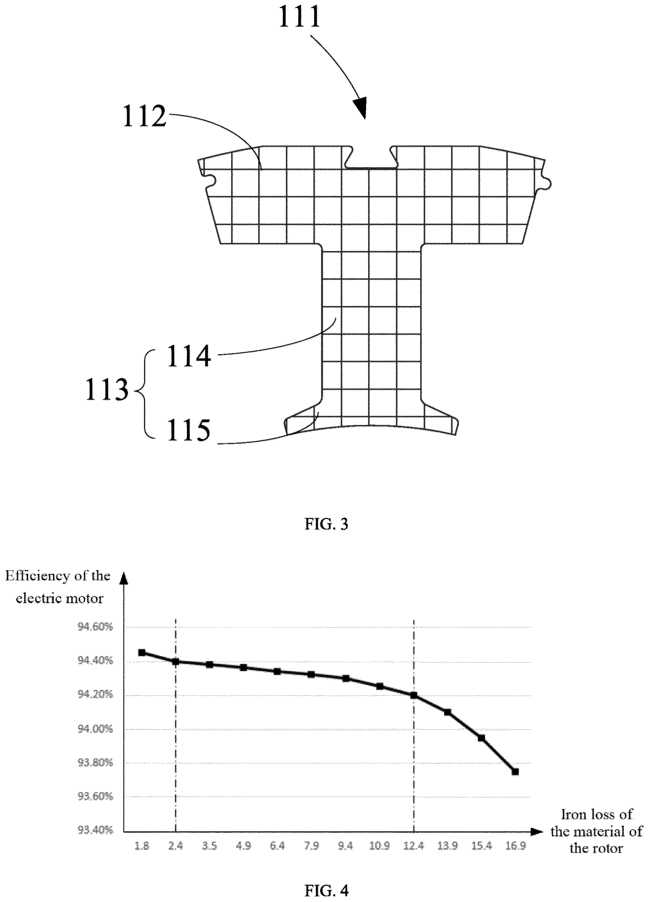

As shown in FIG. 1 and FIG. 3, the first aspect according to the present application provides an electric motor 100, including: a stator iron core 110 and a rotor iron core 120, and the stator iron core 110 comprises a plurality of iron core blocks 111 spliced in a circumferential direction, each iron core block 111 comprises a plurality of stator laminations stacked in an axial direction of the electric motor 100; and the rotor iron core 120 comprises a plurality of rotor laminations stacked in an axial direction; and the number of the stator laminations is greater than that of the rotor laminations, and the iron loss of each stator lamination is less than that of each rotor lamination.

Specifically, the electric motor 100 provided by the present application comprises the stator iron core 110 and the rotor iron core 120. The stator iron core 110 comprises a plurality of iron core blocks 111, and the stator iron core 110 can be rendered by connecting all the iron core blocks 111 in the circumferential direction. The stator iron core 110 comprises a tooth part 113, and a stator winding 130 is wound on the tooth part 113; in order to improve the performance of the electric motor 100, in the case that other conditions are not changed, it is necessary to wind as many turns of stator windings 130 as possible on the same tooth part 113. The tooth part 113 is usually located at the inner side of the stator iron core 110 and extends towards the center of the inner hollow place of the stator iron core 110, and when the stator winding 130 is wound on the tooth part 113, this will usually be affected by other parts of the stator iron core 110, and then winding the stator winding 130 becomes difficult; the distance between two adjacent tooth parts 113 is fixed and narrow, and thus, when the stator winding 130 is wound on a tooth part 113, this is usually blocked by other adjacent tooth parts 113 of the tooth part 113, this structure further impedes the winding of the stator windings 130, and the assembling difficulty for the electric motor 100 is increased, and the slot fullness rate of the stator iron core 110 is affected. However, the stator iron core 110 comprises a plurality of iron core blocks 111, when the iron core blocks 111 are not connected to be the stator iron core 110, each iron core block 111 is respectively wound with the stator winding 130, the iron core block 111 comprises the tooth part 113, the tooth part 113 is directly exposed, and thus, when the stator winding 130 is wound, it will not be impeded by other parts of the stator iron core 110; if each iron core block 111 only comprises one tooth part 113, when the stator winding 130 is wound on the tooth part 113, there are not adjacent tooth parts 113 on the two sides of the tooth part 113, the operation space becomes large, the winding difficulty of the stator windings 130 is greatly reduced, and as many turns of stator windings 130 as possible can be wound on the tooth part 113, and finally, the iron core blocks 111 after the winding of all the stator windings 130 is completed are spliced along the circumferential direction, and thus a complete stator is obtained.

Furthermore, in a working process of the electric motor 100, the iron loss of the stator iron core 110 and the rotor iron core 120 is rendered due to multiple aspects, while the eddy current loss is one of the most important sources of the iron loss. In order to reduce the eddy current loss generated by the stator iron core 110 and the rotor iron core 120, the stator iron core 110 comprises a plurality of iron core blocks 111, each iron core block 111 comprises a plurality of stator laminations stacked in the axial direction of the electric motor 100; the rotor iron core 120 comprises a plurality of rotor laminations stacked in the axial direction of the electric motor 100. Such method that the iron core block 111 is stacked by stator laminations and the rotor iron core 120 is stacked by the rotor laminations can effectively reduce the eddy current loss of the stator iron core 110 and the rotor iron core 120, and improve the energy and efficiency of the electric motor 100.

Understandably, during the working process of the electric motor 100, the iron loss of the rotor is usually greatly less than that of the stator, and therefore, through disposing the iron loss of each rotor lamination to be greater than that of each stator lamination, under the condition of ensuring the performance of the electric motor 100, the cost of the rotor can be reduced, and furthermore, the cost of the electric motor 100 is reduced, and the cost performance of the electric motor 100 is improved.

Furthermore, the number of the stator laminations is greater than that of the rotor laminations, and the iron loss of the rotor iron core 120 is greatly less than that of the stator iron core 110, and therefore, under the condition of ensuring the performance and the efficiency of the electric motor 100, the requirements for the material and structure of the rotor iron core 120 can be appropriately relaxed to reduce the cost of the electric motor 100. Generally, the axial thicknesses of the stator and the rotor of the electric motor 100 are substantially the same, that is, the axial thickness of the stator iron core 110 is equivalent to the axial thickness of the rotor iron core 120. In order to reduce the eddy current loss generated by the stator iron core 110 and the rotor iron core 120, the iron core block 111 of the stator iron core 110 comprises a plurality of stator laminations stacked in the axial direction of the electric motor 100, and the rotor iron core 120 comprises a plurality of rotor laminations stacked in the axial direction of the electric motor 100. In order to reduce the manufacturing cost of the electric motor 100, the number of the stator laminations is disposed to be greater than that of the rotor laminations, since the axial thickness of the stator iron core 110 is equivalent to the axial thickness of the rotor iron core 120, the thickness of the stator lamination should be less than the thickness of the rotor lamination, and it is understandable that the thinner the stator lamination or the rotor lamination is and the greater the number of the stacked stator laminations or the stacked rotor laminations is, the less the iron loss of the stator iron core 110 or the rotor iron core 120 is and the higher the manufacturing and assembling cost is; therefore, under the condition of ensuring the efficiency of the electric motor 100, the requirements for the manufacturing and assembling conditions of the rotor iron core 120 which has a less iron loss can be appropriately relaxed, the thickness of the rotor lamination is increased while the number of the rotor laminations is reduced, and the manufacturing cost of the rotor is reduced under the condition of ensuring the efficiency of the electric motor 100, and furthermore, the manufacturing cost of the electric motor 100 is reduced, and the cost performance of the electric motor 100 is improved.

For the electric motor 100 provided in the present embodiment, the stator iron core 110 comprises a plurality of iron core blocks 111 spliced along the circumferential direction, and thus the difficulty of winding the stator windings 130 on the stator iron core 110 is reduced and the slot fullness rate of the stator iron core 110 is increased, and the performance of the electric motor 100 is improved; the iron core block 111 comprises a plurality of stator laminations stacked in the axial direction of the electric motor 100 and the rotor iron core 120 comprises a plurality of rotor laminations stacked in the axial direction of the electric motor 100, and such a structure can effectively reduce the eddy current loss of the stator iron core 110 and the rotor iron core 120, reduce the iron loss of the electric motor 100 and improve the energy and efficiency of the electric motor 100; through the arrangement that the number of the stator laminations is greater than that of the rotor laminations, i.e., the thickness of the rotor lamination is greater than that of the stator lamination, and through the arrangement that the iron loss of each stator lamination is less than that of each rotor lamination, under the condition of ensuring the performance of the electric motor 100, the manufacturing and assembling costs of a rotor are reduced as much as possible, and furthermore, the cost of the electric motor 100 is reduced, and the cost performance of the electric motor 100 is improved.

The above electric motor provided by the present application can further comprise the following additional features.

In some possible embodiments, furthermore, the iron loss of the above stator lamination is greater than or equal to 1.8W/Kg and less than or equal to 3.8W/Kg when it is magnetized to 1.6T at a frequency of 60Hz.

In the embodiment, the iron loss of the above stator lamination is less than or equal to 3.8W/Kg and greater than or equal to 1.8W/Kg when it is magnetized to 1.6T at a frequency of 60Hz, both the upper limit and the lower limit of the iron loss of the stator lamination when it is magnetized to 1.6T at a frequency of 60Hz are defined, and this ensures performance of the electric motor 100; the iron loss of each rotor lamination should be greater than that of each stator lamination, that is, the iron loss of the rotor lamination is at least greater than 1.8W/Kg, the cost of the material of the rotor lamination is less than the cost of the material of the stator lamination, and the cost of the material of the rotor lamination is reduced under the condition of not affecting the performance of the electric motor 100 as much as possible, and the cost performance of the electric motor 100 is improved.

Furthermore, for the electric motor 100 provided in the embodiment, through arranging the upper limit and the lower limit of the iron loss of the stator lamination when it is magnetized to 1.6T at a frequency of 60Hz, a specific requirement for the performance of the material of the stator lamination is set, while the iron loss of each rotor lamination should be greater than that of each stator lamination, and therefore, the performance of the material of the rotor lamination is defined indirectly. It is understandable that the iron loss of the rotor lamination is not limited to the two limiting values of 1.8W/Kg and 3.8W/Kg when it is magnetized to 1.6T at a frequency of 60Hz, and is at least greater than 1.8W/Kg, as long as the performance of the electric motor 100 is ensured, the iron loss of the rotor lamination under the above condition can be increased appropriately, and thus the cost of the material of the rotor lamination is reduced, and the cost performance of the electric motor 100 provided by the present embodiment is improved. In addition, as long as the number of the stator laminations is greater than that of the rotor laminations, the iron loss of each rotor lamination is greater than that of each stator lamination, the condition of measuring the iron loss, for example, the stator lamination is magnetized to 1.7T at a frequency of 60Hz, further falls within the protection scope of the present application.

And, 1.6T represents 1.6 Tesla, and 3.8W/Kg represents 3.8 watts per kilogram.

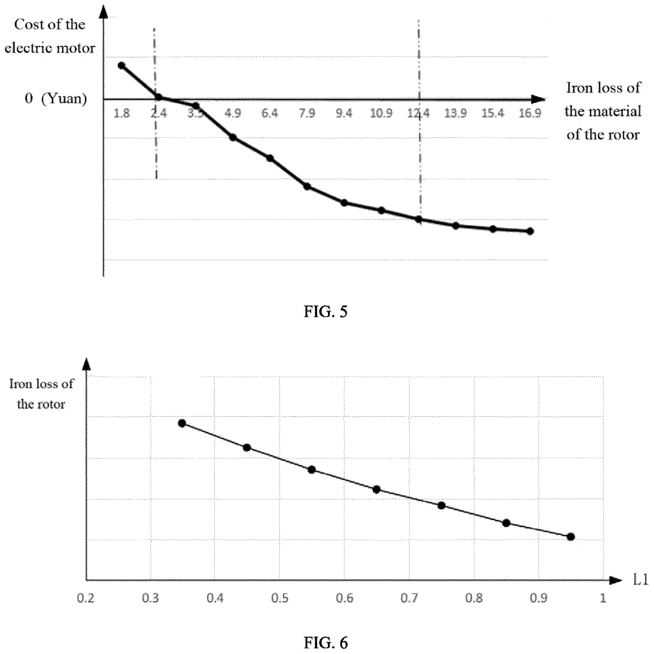

As shown in FIG. 4 and FIG. 5, in some possible embodiments, furthermore, the iron loss of the above rotor lamination is less than or equal to 12.5W/Kg when it is magnetized to 1.6T at a frequency of 60Hz.

In the embodiment, the iron loss of the above rotor lamination should be less than or equal to 12.5W/Kg when it is magnetized to 1.6T at a frequency of 60Hz, and the upper limit of the iron loss of the rotor lamination when it is magnetized to 1.6T at a frequency of 60Hz is specifically defined. Since the iron loss of a rotor is determined by the material of the rotor under the same condition, the material of the rotor plays an important role in the manufacturing cost of the electric motor 100, it is necessary to find the upper limit of the iron loss of the rotor lamination suitable in a certain environment, to reduce the manufacturing cost of the electric motor 100 as much as possible while the efficiency of the electric motor 100 is met. When the rotor lamination is magnetized to 1.6T at a frequency of 60Hz, once the iron loss of the rotor lamination is greater than 12.5W/Kg, there is not much change in the corresponding cost of the electric motor 100, but the magnitude of the decrease in the efficiency of the electric motor 100 becomes severe. Therefore, the iron loss of the rotor lamination can be defined, when the rotor lamination is magnetized to 1.6T at a frequency of 60Hz, the iron loss of the rotor lamination should be less than or equal to 12.5W/Kg, and then the selection for the material of the rotor lamination is defined.

According to the electric motor 100 provided by the present embodiment, through the arrangement that the iron loss of the rotor lamination should be less than or equal to 12.5W/Kg when it is magnetized to 1.6T at a frequency of 60Hz, the selection for the material of the rotor lamination is further defined, and the cost of the electric motor 100 can be decreased as much as possible under the condition of ensuring the working efficiency of the electric motor 100.

As shown in FIG. 4 and FIG. 5, in some possible embodiments, furthermore, the iron loss of the above rotor lamination is greater than or equal to 2.4W/Kg when it is magnetized to 1.6T at a frequency of 60Hz.

In the embodiment, the iron loss of the above rotor lamination should be greater than or equal to 2.4W/Kg when it is magnetized to 1.6T at a frequency of 60Hz, which makes a specific definition to the lower limit of the iron loss of the rotor lamination when it is magnetized to 1.6T at a frequency of 60Hz. Since the material of the rotor determines the cost of the electric motor 100 and the iron loss of the rotor under the same condition, the iron loss of the rotor plays an important role in the efficiency of the electric motor 100. Therefore, it is necessary to find the lower limit of the iron loss of the rotor lamination suitable in a certain environment, to improve the efficiency of the electric motor 100 as much as possible within an acceptable range of the cost of the electric motor 100. When the rotor lamination is magnetized to 1.6T at a frequency of 60Hz, the iron loss of the rotor lamination is greater than or equal to 2.4W/Kg, then the efficiency of the electric motor 100 satisfies working requirements, while once the iron loss of the rotor lamination is less than 2.4W/Kg, the cost of the electric motor 100 will increase significantly, and at the moment, the cost of the electric motor 100 is beyond the acceptable range for a general manufacturer. Therefore, the iron loss of the rotor lamination can be defined, when the rotor lamination is magnetized to 1.6T at a frequency of 60Hz, the iron loss of the rotor lamination should be large than or equal to 2.4W/Kg, and then the selection for the material of the rotor lamination is defined.

According to the electric motor 100 provided by the present embodiment, through the arrangement that the iron loss of the rotor lamination should be greater than or equal to 2.4W/Kg when it is magnetized to 1.6T at a frequency of 60Hz, the selection for the material of the rotor lamination is further defined, and the efficiency of the electric motor 100 can be improved as much as possible within an acceptable range of the cost of the electric motor 100.

As shown in FIG. 1, in some possible embodiments, furthermore, the number of the above stator laminations is X, the number of the above rotor laminations is Y, and they satisfy 1.15Y≤X ≤1.5Y.

In the embodiment, the number of the above stator laminations should be greater than that of the rotor laminations. If the number of the stator laminations is set to be X and the number of the rotor laminations is set to be Y, then X>Y. Both the number of the stator laminations and the number of the rotor laminations will generate influence to the efficiency of the electric motor 100, and in addition, the iron loss of the stator lamination is less than that of the rotor lamination, the thickness of the stator iron core 110 in the axial direction of the electric motor 100 is equivalent to thickness of the rotor iron core 120 in the axial direction of the electric motor 100, that is, the cost of the stator lamination is greater than that of the rotor lamination; in order to save cost as much as possible, the number X of the stator laminations and the number Y of the rotor laminations should be set according to actual needs, and the difference between the two should not be too significant. When the number X of the stator laminations is certain while the number Y of the rotor laminations is too small, during the working process of the electric motor 100, the eddy current loss of the rotor iron core 120 is too large, the iron loss is too large, and thus the efficiency of the electric motor 100 is lowered; when the number X of the stator laminations is certain while the number Y of the rotor laminations is too large, the manufacturing and assembling costs of the rotor iron core 120 are too large, the improving of the efficiency of the electric motor 100 is limited, the cost of the electric motor 100 is increased, and the cost performance is reduced. Therefore, when the number X of the stator laminations is certain, it is necessary to limit the number Y of the rotor laminations, and the specific range of the number Y of the rotor laminations is 1.15Y≤X≤1.5Y.

According to the electric motor 100 provided in the present embodiment, through setting the number X of the stator laminations to be certain, in order to reduce the cost of the electric motor 100 while improve the efficiency of the electric motor 100 as much as possible, and improve the cost performance of the electric motor 100, the value of the number Y of the rotor laminations is defined, and the value of Y is limited to be in a range, specifically, 1.15Y≤X≤1.5Y.

As shown in FIG. 1, FIG. 2, FIG. 6 and FIG. 7, in some possible embodiments, furthermore, there is a stator groove between two adjacent iron core blocks 111 in the above plurality of iron core blocks 111, and the width of the notch 116 of the stator groove is M, the minimum gap between the stator iron core 110 and the rotor iron core 120 is L1, and, 0.15≤L1/M ≤1.5.

In the embodiment, there is a stator groove between two adjacent iron core blocks 111 in the above iron core blocks 111, and the width of the notch 116 of the stator groove is M. The iron core block 111 comprises a tooth part 113, the top portion of the tooth part 113 is provided with a tooth boot 115 for limiting the stator windings 130 wound on the tooth part 113, both of two adjacent tooth parts 113 have a tooth boot 115 close to each other at the top portions, and the distance between the two tooth boots 115 is called the notch 116, and the width of the notch 116 is M, the greater the M is, the greater the iron loss of a rotor is; if the M is too small, the performance of the electric motor 100 will be affected, and this makes the working of the electric motor 100 unstable. However, the minimum gap between the stator iron core 110 and the rotor iron core 120 is L1, the greater the L1 is, the less the iron loss of the rotor is, but this will cause excessive magnetic leakage, increase the operating cost of the electric motor 100, and reduce the efficiency of the electric motor 100, and thus, if the L1 is too small, the gap between the stator iron core 110 and the rotor iron core 120 is too small, when the rotor rotates, the two will easily rub and collide with each other, and this results in the phenomenon of sweeping the chamber and damages the electric motor 100. Therefore, in order that the value of L1 and the value of M are in a reasonable range, it is necessary to define their relations, and 0.15≤L1/M≤1.5, and thus they affect and restrict each other, both L1 and M can obtain an appropriate value, and then the iron loss of the rotor is reduced as much as possible while the working efficiency of the electric motor 100 is ensured.

According to the electric motor 100 provided by the present embodiment, the width M of the notch 116 and the minimum gap L1 between the stator iron core 110 and the rotor iron core 120 restrict each other and both of them are in a reasonable range, specifically, 0.15≤L1/M≤1.5, through reducing M as much as possible within a reasonable range, the value of L1 is further defined, and the iron loss of the rotor of the electric motor 100 is reduced to the maximum extent, and thus the effect that the cost of the electric motor 100 is reduced while the efficiency of the electric motor 100 does not change much is achieved, and the cost performance of the electric motor 100 is improved.

As shown in FIG. 1, FIG. 2 and FIG. 6, in some possible embodiments, furthermore, the maximum gap between the above stator iron core 110 and the above rotor iron core 120 is L2, and, 0.15≤L2×L1≤2.

In the embodiment, there is a gap between the stator iron core 110 and the rotor iron core 120, due to the structure feature of the stator iron core 110 and the rotor iron core 120, the width of the gap between them is not a constant value. The minimum gap between the stator iron core 110 and the rotor iron core 120 is L1, and the maximum gap between the stator iron core 110 and the rotor iron core 120 is L2. According to the specific structures of the stator iron core 110 and the rotor iron core 120, when the direct axis of the rotor of the electric motor 100 is aligned with the centerline of the tooth part 113 of the stator of the electric motor 100, along the center line of the cross axis, the distance between the stator iron core 110 and the rotor iron core 120 in the centerline of the cross axis is the maximum gap L2 between the stator iron core 110 and a rotary shaft iron core. Similar to L1, if the value of L2 is too large, it will cause excessive magnetic leakage and reduce the efficiency of the electric motor 100; if the value of L2 is too small, the corresponding value of L1 will be less, and the gap between the stator iron core 110 and the rotor iron core 120 will be very small; when the rotor rotates, the two easily rub and collide with each other, and this results in the phenomenon of sweeping the chamber and damages the electric motor 100. Therefore, similar to L1, it is necessary to limit the value of L2. However, the value of L1 is limited to be in a range, and thus L2 can be limited through L1, specifically, 0.15≤L2×L1≤2.

As shown in FIG. 1 to FIG. 3 and FIG. 7, in some possible embodiments, furthermore, the above iron core block 111 comprises a yoke part 112 and a tooth part 113, the tooth part 113 is connected to the yoke part 112, the tooth part 113 comprises a tooth root 114 and a tooth boot 115, and the tooth root 114 is connected between the yoke part 112 and the tooth boot 115; and, there is the notch 116 between the tooth boots 115 of two adjacent iron core blocks 111, and the width of the end part of the tooth boot 115 is L3, 0.16^L3/M^3.

In the embodiment, the yoke part 112 and the tooth part 113 are provided on the iron core block 111, and the tooth part 113 is connected to the yoke part 112. When the stator iron core 110 is formed by splicing a plurality of iron core blocks 111, two adjacent iron core blocks 111 are connected through the yoke part 112, and the tooth parts 113 of two adjacent iron core blocks 111 do not contact each other. However, the tooth part 113 comprises the tooth root 114 and the tooth boot 115, and the tooth boot 115 is connected to the yoke part 112 through the tooth root 114. When two iron core blocks 111 are connected, the tooth boots 115 of the above two iron core blocks 111 get close to each other, the gap between the two tooth boots 115 is called the notch 116, the width of the notch 116 is M, and the width of the end part of the tooth boot 115 is L3. When the width L3 of the end part of the tooth boot 115 is too large, the space for winding the stator windings 130 in the tooth part 113 will be decreased, the turns of the stator windings 113 will be decreased, and the performance of the electric motor 100 is lowered; if the width L3 of the end part of the tooth boot 115 is too small, the stator winding 130 cannot be restricted effectively, and this easily cause the detachment of the stator winding 130. Therefore, it is necessary to restrict the value of the L3. L3 can be restricted through the value of M, specifically, 0.16≤L3/M≤3.

As shown in FIG. 1 to FIG. 3, in some possible embodiments, furthermore, the plurality of iron core blocks 111 comprise a plurality of yoke parts 112 distributed along the circumferential direction, each yoke part 112 comprises a convex part and a concave part distributed at the two sides of the circumferential direction, and the convex part of one yoke part 112 extends into the concave part of the adjacent yoke part 112.

In the embodiment, the plurality of iron core blocks 111 comprise a plurality of yoke parts 112 distributed along the circumferential direction, the two sides of each yoke part 112 are respectively provided with the convex part and the concave part. When the convex part of the yoke part 112 of each iron core block 111 is inserted into the concave part of the adjacent iron core block 111, the two adjacent iron core blocks 111 are connected to each other, and all the iron core blocks 111 are connected and jointly form the stator iron core 110.

According to the electric motor 100 provided by the present embodiment, through disposing the convex part and the concave part with mutually matching shapes on both sides of the yoke part 112 of each iron core block 111 in the circumferential direction, two adjacent iron core blocks 111 can be connected through the matching of the convex part and the concave part. When the convex part of the yoke part 112 of the same iron core block 111 extends into the concave part of the yoke part 112 of another iron core block 111, the two iron core blocks 111 are connected together, and all the iron core blocks 111 are connected successively and jointly form the stator iron core 110.

As shown in FIG. 1, in some possible embodiments, furthermore, the number of the above stator grooves is greater than or equal to 6, and less than or equal to 12.

In the embodiment, the above stator groove is the space between two adjacent tooth parts 113. When the iron core blocks 111 are connected and form a complete stator iron core 110, the number of the stator grooves is equal to the number of the tooth parts 113, while the tooth parts 113 and the yoke parts 112 correspond to each other one by one, and thus the number of the stator grooves is further equal to the number of the yoke parts 112 at the same time. When the size of the stator is certain, the number of the stator windings 130, the slot fullness rate of the stator and the size of the space of the stator grooves have a very important influence on the performance of the stator of the electric motor 100, while the number of the stator windings 130, the slot fullness rate of the stator and the size of the space of the stator grooves can be determined by the number of the tooth parts 113 on the stator iron core 110. Therefore, when the size of the stator is certain, the number of the tooth parts 113 that the stator iron core 110 comprises has an important influence to the performance of the electric motor 100. Through limiting the number of the stator grooves, the number of the tooth parts 113 and the number of the yoke parts 112 on the stator iron core 110 are further limited, and it is further ensured that the performance of the electric motor 100 is within a reasonable range. Specifically, the number of the stator grooves is greater than or equal to 6, and less than or equal to 12.

According to the electric motor 100 provided in the present embodiment, through limiting the number of the stator grooves in the stator iron core 110, it is required that the number of the stator grooves should be greater than or equal to 6, and less than or equal to 12, and meanwhile, the number of the tooth parts 113 and the number of the yoke parts 112 on the stator iron core 110, which are the same with the number of the stator grooves, are further limited, and furthermore, it is ensured that the performance of the electric motor 100 where the stator iron core 110 is located is in a reasonable range.

As shown in FIG. 1, in some possible embodiments, furthermore, the outer diameter of the stator iron core 110 is D1, the outer diameter of the rotor iron core 120 is D2, and, 0.47≤D1/D2≤ 0.68.

In the embodiment, the above rotor iron core 120 is disposed inside the stator ion core 110; when the electric motor 100 works, the rotor iron core 120 needs to rotate inside the stator iron core 110, therefore, the outer diameter of the rotor iron core 120 should be less than the inner diameter of the stator iron core 110. When the outer diameter of the rotor iron core 120 and the inner diameter of the stator iron core 110 are determined, the size of the outer diameter of the stator iron core 110 determines the size of the space of the stator groove in the stator iron core 110, and further determines the number of the stator windings 130 wound on the tooth part 113 and the magnitude of magnetic force produced in the stator iron core 110 when the electric motor 100 works. When the outer diameter of the stator iron core 110 is too large, the tooth part 113 and the stator groove in the stator iron core 110 are further too large, the performance of the stator is affected, and the internal magnetic field of the stator iron core 110 is too large when the electric motor 100 works, the rotor rotates in an excessively large magnetic field, the energy for producing the magnetic field and a portion of the material of the stator iron core 110 are wasted, and under the condition of achieving the same effect, the cost is wasted; when the outer diameter of the stator iron core 110 is too small, the tooth part 113 and the stator groove in the stator iron core 110 are further too small, the performance of the stator is affected and the internal magnetic field of the stator iron core 110 is too small when the electric motor 100 works, it is difficult for the rotor to rotate in a magnetic field that is too small, the performance of the electric motor 100 is affected, the efficiency of the electric motor 100 is reduced, and the required effect cannot be achieved. Therefore, the relation between the size of the rotor iron core 120 and the size of the stator iron core 110 is defined to ensure the efficiency of the electric motor 100. Specifically, the ratio of the outer diameter D1 of the stator iron core 110 to the outer diameter D2 of the rotor iron core 120 has an upper limit of 0.68 and a lower limit of 0.47, i.e., 0.47≤D1/D2≤0.68.

According to the electric motor 100 provided in the present embodiment, through the arrangement that the ratio of the outer diameter D1 of the stator iron core 110 to the outer diameter D2 of the rotor iron core 120 has an upper limit of 0.68 and a lower limit of 0.47, both the size of the stator iron core 110 and the size of the rotor iron core 120 are in a reasonable range, the efficiency of the electric motor 100 is ensured, and this avoids that the stator iron core 110 is too large or too small relative to the rotor iron core 120, which results in the cost waste and reduces the efficiency of the electric motor 100.

As shown in FIG. 1, in some possible embodiments, furthermore, the number of poles of the above electric motor 100 is greater than or equal to 4 and less than or equal to 10.

In the embodiment, the number of the poles of the electric motor 100 directly determines the power, the rotation speed, and the performance of the electric motor 100, and is one of the most important parameters of the electric motor 100. To minimize cost as much as possible while ensure the efficiency of the electric motor 100, it is necessary to limit the number of the poles of the electric motor 100. The number of the poles of the motor 100 cannot be too small, otherwise the power of the electric motor 100 is too small and the use of the electric motor 100 is affected; the number of the poles in the electric motor 100 should not be too large, a too large number of the poles will increase the manufacturing cost of the electric motor 100 and cause unnecessary waste. Specifically, the number of poles of the above electric motor 100 is defined to be greater than or equal to 4 and less than or equal to 10.

In a specific embodiment, the rotor iron core 120 comprises a certain number of rotor laminations stacked along the axial direction of the electric motor 100, and the rotor laminations are silicon steel sheets. After the rotor iron core 120 is formed through stacking the certain number of rotor laminations along the axial direction of the electric motor 100, a mounting groove is provided in the rotor iron core 120, and the mounting groove is located inside the rotor iron core 120 and distributed along the circumferential direction of the rotor iron core 120; a plurality of permanent magnets 121 are inserted into the mounting groove and then mounted inside the rotor iron core 120, and furthermore, magnetic poles which number is twice of the number of the poles of the electric motor 100 and which polarities change alternatively in the circumferential direction are formed on the rotor.

As shown in FIG. 1, in some possible embodiments, furthermore, the above rotor iron core 120 is sleeved on the inner side of the above stator iron core 110.

In the embodiment, the above rotor iron core 120 is sleeved on the inner side of the above stator iron core 110; when the electric motor 100 works, the rotor iron core 120 rotates and works in the internal space of the stator iron core 110 due to the influence of a magnetic force. The electric motor 100 provided in the present embodiment is an inner rotor electric motor 100.

In some possible embodiments, furthermore, the above electric motor 100 comprises a permanent magnet motor.

In the embodiment, the above electric motor 100 comprises the permanent magnet motor, the permanent magnet motor has the advantages of high power efficiency, high power factor, low iron loss, etc., and there is little friction and noise during the working process. From multiple perspectives, the permanent magnet motor has significant advantages over other types of electric motors 100 and is suitable for the electric motor 100 used in the present embodiment.

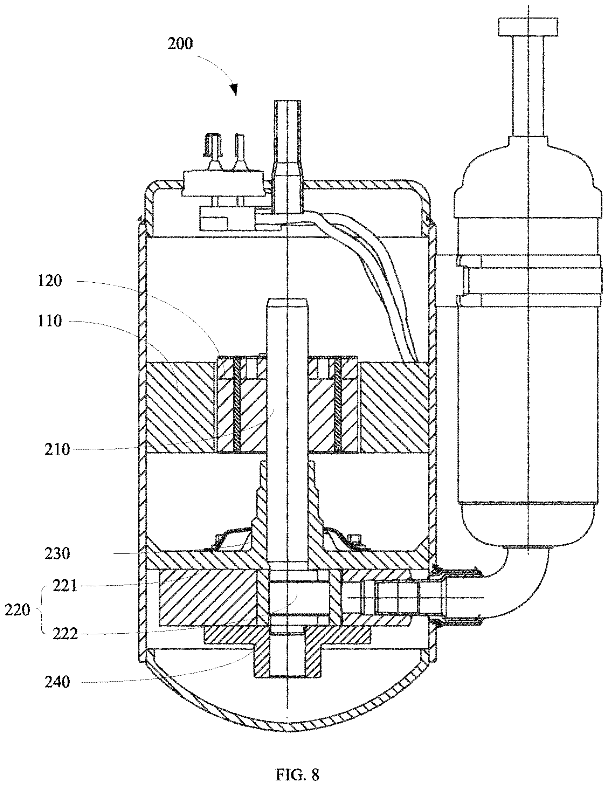

As shown in FIG. 8, the second aspect according to the present application further provides a compressor 200, and the compressor 200 comprises the electric motor 100 provided in any of the above embodiments.

The compressor 200 provided by the present application comprises the electric motor 100 according to any of the above embodiments, and therefore has all the beneficial effects of the above electric motor 100, which are not stated here one by one.

In the embodiment, the above compressor 200 further comprises a shaft 210, a power unit 220, a main bearing 230 and an auxiliary bearing 240, and, the shaft 210 is provided at the rotor iron core 120 of the rotor, and is connected to the rotor iron core 120; the power unit 220 comprises a piston 222 and a cylinder 221, the cylinder 221 is connected to the piston 222, and the piston 222 is connected to the shaft 210; the main bearing 230 is provided on the shaft 210, and located between the power unit 220 and the electric motor 100; the auxiliary bearing 240 is further provided at one end of the shaft 210, and the power unit 220 is located between the auxiliary bearing 240 and the main bearing 230.

Specifically, in the embodiment, the shaft 210 of the compressor 200 passes through the shaft hole of the rotor iron core 120 and is connected to the rotor iron core 120, and the shaft 210 is connected to the power unit 220; when the compressor 220 works, the cylinder 221 of the power unit 220 drives the piston 222 to move, the piston 222 brings the shaft 210 to rotate and further brings the rotor iron core 120 to rotate, and the main bearing 230 and the auxiliary bearing 240 are respectively located at the two ends of the power unit 220 along the direction of the shaft 210.

The third aspect according to the present application further provides a refrigeration apparatus, and the above refrigeration apparatus comprises the electric motor 100 provided in any of the above embodiments, or the compressor 200 provided in any of the above embodiments.

The refrigeration apparatus is a typical electrical device that requires the use of an electric motor 100. A conventional refrigeration apparatus requires the use of the compressor 200, while only a few special refrigeration apparatuses are not equipped with the compressor 200, instead, other types of equipment are directly driven by the electric motor 100 for cooling and refrigeration.

The refrigeration apparatus provided by the present application comprises the electric motor 100 of the above embodiments, or the compressor 200 of the above embodiments, and therefore, the above refrigeration apparatus has all the beneficial effects of the above electric motor 100 or the above compressor 200, which are not stated here one by one.

In the present application, the phrase of "a plurality of" indicates two or more than two, unless otherwise explicitly specified or defined. The terms of "mounting", "connected to", "connected", "fixing" and the like should be understood in a broad sense, for example, "connected" may be a fixed connection, and may further be a removable connection, or an integral connection; and "connected to" may be a direct connection and may further be an indirect connection through an intermediate medium. A person of ordinary skills in the art could understand the specific meanings of the terms in the present application according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present application. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present application, and are not used to limit the present application. For a person skilled in the art, the present application may have various changes and variations. Any modifications, equivalent substitutions, improvements, etc. made within the spirit and principle of the present application shall all be included in the protection scope of the present application.

## Claims

1. An electric motor, comprising:
a stator iron core, wherein the stator iron core comprises a plurality of iron core blocks spliced in a circumferential direction, each iron core block comprises a plurality of stator laminations stacked in an axial direction of the electric motor; and
a rotor iron core, wherein the rotor iron core comprises a plurality of rotor laminations stacked in an axial direction,
wherein:
the number of the stator laminations is greater than that of the rotor laminations; and
the iron loss of each stator lamination is less than that of each rotor lamination.

2. The electric motor according to claim 1, wherein the iron loss of the stator lamination is greater than or equal to 1.8W/Kg and less than or equal to 3.8W/Kg when it is magnetized to 1.6T at a frequency of 60Hz.

3. The electric motor according to claim 1, wherein the iron loss of the rotor lamination is less than or equal to 12.5W/Kg when it is magnetized to 1.6T at a frequency of 60Hz.

4. The electric motor according to claim 3, wherein the iron loss of the rotor lamination is greater than or equal to 2.4W/Kg when it is magnetized to 1.6T at a frequency of 60Hz.

5. The electric motor according to claim 1, wherein the number of the stator laminations is X, the number of the rotor laminations is Y, and they satisfy 1.15Y≤X≤1.5Y.

6. The electric motor according to claim 1, wherein:
a stator groove is provided between two adjacent iron core blocks in the plurality of iron core blocks;
a width of a notch of the stator groove is M; and
the minimum gap between the stator iron core and the rotor iron core is L1, wherein 0.15≤ L1/M≤1.5.

7. The electric motor according to claim 6, wherein the maximum gap between the stator iron core and the rotor iron core is L2, wherein 0.15≤L2×L1≤2.

8. The electric motor according to claim 6, wherein:
the iron core block comprises a yoke part and a tooth part;
the tooth part is connected to the yoke part;
the tooth part comprises a tooth root and a tooth boot;
the tooth root is connected between the yoke part and the tooth boot;
the notch is provided between the tooth boots of two adjacent iron core blocks; and
the width of the end part of the tooth boot is L3, wherein 0.16≤L3/M≤3.

9. The electric motor according to claim 8, wherein:
the plurality of iron core blocks comprise a plurality of yoke parts distributed along the circumferential direction;
each yoke part comprises a convex part and a concave part distributed at two sides of the circumferential direction; and
the convex part of one yoke part extends into the concave part of an adjacent yoke part.

10. The electric motor according to claim 6, wherein the number of the stator grooves is greater than or equal to 6 and less than or equal to 12.

11. The electric motor according to any one of claims 1 to 10, wherein the outer diameter of the stator iron core is D1, the outer diameter of the rotor iron core is D2, wherein 0.47≤D1/D2≤ 0.68.

12. The electric motor according to any one of claims 1 to 10, wherein the number of poles of the electric motor is greater than or equal to 4 and less than or equal to 10.

13. The electric motor according to any one of claims 1 to 10, wherein the rotor iron core is sleeved on the inner side of the stator iron core.

14. The electric motor according to any one of claims 1 to 10, wherein the electric motor comprises a permanent magnet motor.

15. A compressor, comprising the electric motor according to any one of claims 1 to 14.

16. A refrigeration apparatus, comprising the electric motor according to any one of claims 1 to 14, or the compressor of claim 15.
